(19) Europäisches Patentamt
European Patent Office
Office européen des brevets

(11) EP 0 570 233 B1

(12) **EUROPEAN PATENT SPECIFICATION**

(45) Date of publication and mention of the grant of the patent:
**18.09.1996 Bulletin 1996/38**

(51) Int. Cl.[6]: **B27K 3/52**, C09K 21/12

(21) Application number: **93303729.3**

(22) Date of filing: **14.05.1993**

(54) **Fire retardant and intumescent compositions for cellulosic material**

Feuerhemmende und intumeszierende Zusammensetzungen für zellulosehaltiges Material

Compositions retardatrices de feu et intermescentes pour des matériaux cellulosiques

(84) Designated Contracting States:
**AT BE CH DE DK ES FR GB GR IE IT LI LU MC NL PT SE**

(30) Priority: **15.05.1992 ZA 923533**

(43) Date of publication of application:
**18.11.1993 Bulletin 1993/46**

(73) Proprietor: **CSIR**
**Pretoria Transvaal Province (ZA)**

(72) Inventors:
- **Strydom, Jacobus Stephanus**
  **Constantia Park, Pretoria (ZA)**
- **Basson, Gabriel Richter**
  **Silverton, Pretoria (ZA)**

(74) Representative: **SERJEANTS**
**25, The Crescent**
**King Street**
**Leicester, LE1 6RX (GB)**

(56) References cited:
**GB-A- 2 062 039** **US-A- 3 925 137**
**US-A- 4 062 818**

- **CHEMICAL ABSTRACTS, vol. 97 Columbus, Ohio, US; abstract no. 74052, MORAVEC, VLADIMIR ET AL. "Fireproof paint composition"**
- **CHEMICAL ABSTRACTS, vol. 106 Columbus, Ohio, US; KUCERA, JAROMIR ET AL. 'Dispersion coating composition and putty with fire-protective effect'**
- **CHEMICAL ABSTRACTS, vol. 109 Columbus, Ohio, US; abstract no. 75387, CHEN, TISONG ET AL. 'Intumescent fire -resistant paints'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Rank Xerox (UK) Business Services
2.13.4/3.4

## Description

### FIELD OF THE INVENTION

The present invention relates to an aqueous fire retardant coating for combustible materials, in particular cellulosic materials such as wood or cardboard. The invention also relates to an aqueous fire retardant and intumescent coating for the protection of such combustible material, and to a method of protecting cellulosic material against fire.

The present invention is primarily concerned with the protection against fire of cellulosic materials such as wood and cardboard and in this context the invention includes in its scope such protection of mining timber, but also extends to roof trusses in buildings, to paper, cardboard and other similar processed forms of wood or cellulose and to all building and structural materials made of wood or comprising cellulose, and to packaging such as cardboard boxes, protected against fire by means of the compositions and methods in accordance with the invention.

### BACKGROUND TO THE INVENTION

Fire retardant coatings for timber and similar combustible construction materials are known. It is known that certain phosphate and similar esters have fire retardant properties, e.g. when used as an additive in polyisocyanurate or polyurethane foams. It is also known to paint combustible surfaces, in particular wood surfaces, with an intumescent coating material, i.e. a material that bloats when heated to form a bloated thermally insulating layer, which eventually chars, in which form it is still thermally insulating and protecting the underlying structure against fire.

European Patent Publication No. 0 224 484 discloses a method of making a laminate or composite comprising interposing between two or more laminae and in contact therewith, an aqueous composition comprising pentaerythritol, a sugar or starch, ammonium phosphate, water dispersible polyvinyl acetate, a water dispersible melamine formaldehyde or urea formaldehyde resin and a polyamide compound. A water hardenable setting agent such as plaster of paris or portland cement is preferably included in the composition, as may be fibrous reinforcing material such as glass fibre. The method is applied in the manufacture of fire resistant material such as may be used in the manufacture of fire resistant doors. The disclosed method relies entirely on an intumescent layer interposed between two layers of combustible material, and does not address the protection against fire of any of the outer surfaces of the laminate or composite, or the protection of the laminae themselves.

European Patent Publication No. 0 044 270 discloses an aqueous, fire retardant, intumescent composition comprising a catalyst selected from ammonium sulphate, ammonium mono hydrogen phosphate and ammonium dihydrogen phosphate, a spumific selected from urea or methylolated guanylurea phosphate, a carbonific selected from white dextrin or yellow dextrin, formaldehyde, sodium fluoride and water. The composition according to this publication is used for providing a substrate with a flame retardant and heat resistant finish, or as a fire extinguisher. However, all the components of this composition are water soluble, which means that the composition would either penetrate the substrate or run off when it is applied thereto so that only a very thin layer if anything at all would be left on the surface of the substrate. Also, this publication does not teach any method aimed at the long term protection of the substrate against leaching therefrom of the soluble components of the composition.

Furthermore, conventional fire retardants used for the treatment of mining timber usually comprise ammonium sulphate which is cheaper than ammonium phosphates. However, ammonium sulphate is acidic and tends to contribute to the corrosiveness in the wet conditions normally experienced in underground mines.

Conventional fire retardants are also easily leached from the cellulosic material under wet conditions such as in underground mines, or when they are exposed to water such as in the form of rain in above ground applications.

Furthermore, conventional intumescent compositions are normally too expensive to be used for the large scale treatment of low cost combustible materials such as mining timber, or in low cost applications above ground.

There accordingly exists a need for an improved fire retardant capable of providing protection to cellulosic materials over an extended period of time especially under conditions which vary between wet and dry, and which is less corrosive than conventional fire retardants.

There also exists a need for a cost effective fire retardant and intumescent composition which can be applied in a single step and which gives protection against fire over an extended period of time, especially under conditions which vary between wet and dry.

### SUMMARY OF THE INVENTION

According to the invention, there is provided a fire retardant and intumescent composition for the treatment of a cellulosic material such as wood and processed wood, comprising an aqueous fire retardant solution capable of penetrating into the cellulosic material, characterised in that the composition comprises:

- a substantially water insoluble intumescent composition dispersed in the fire retardant solution for forming an intumescent layer on the surface of the cellulosic material; and

- a water dispersible and polymeric binder for forming a water impervious coating on the surface of the cellulosic material to protect it against leaching

therefrom of one or more components of the fire retardant solution.

The aqueous fire retardant solution may comprise:

- a substantially water soluble amide for penetrating into the cellulosic material; and
- a substantially water soluble source of phosphate groups for penetrating into the cellulosic material and for forming phosphate esters with the cellulosic material in the presence of the substantially water soluble amide.

The substantially water insoluble intumescent composition may conveniently comprise:

- a substantially water insoluble blowing agent for remaining on the surface of the cellulosic material; and
- a substantially water insoluble substance capable of forming a carbonaceous char upon heating thereof, for forming, in combination with the blowing agent, an intumescent coating on the surface of the cellulosic material.

The fire retardant and/or fire retardant and intumescent composition preferably comprises a source of inorganic acid groups capable of forming fire retardant esters, in particular a source of phosphate groups. More particularly the composition may comprise such sources as ammonium phosphate, in particular mono ammonium phosphate in concentrations from 5 % to 25 % by weight.

It is to be understood that in this specification, all concentrations are intended to be expressed as percentages by weight, which is equivalent to percentages by mass.

Preferably the composition comprises in combination both a source of phosphate groups and a source of borate groups, because phosphates esterify at lower temperatures, whereas borates do so at higher temperatures and in addition reduce after-glow. The two components are therefore complementary. The source of borate groups may conveniently be or may comprise sodium tetraborate of which the concentration may vary between 1% and 5% by weight.

For most purposes it is necessary for the source of inorganic acid groups to be sufficiently neutral in order to avoid damage to the treated substrate. For that reason phosphoric acid itself is usually not desirable. Diammonium phosphate or ammonium polyphosphate can be used but are less preferred than mono ammonium phosphate. Ammonium polyphosphate is usually also more expensive than mono ammonium phosphate.

The amide component of the fire retardant and intumescent composition may be urea, e.g. in concentrations from 1% to 20% by weight and/or dicyandiamide in concentrations from 0,1% to 2% by weight. Urea and dicyandiamide are preferably used in combination because of their supplementary action in that dicyandiamide is more reactive than urea at lower temperatures. However, urea is usually less expensive than dicyandiamide and thus contributes to the overall cost efficiency of the composition. Alternative amide substances which may be used include methylol melamine, urea formaldehyde and some others.

The compositions in accordance with the invention or to be used in accordance with the invention may also comprise polyhydroxy compounds, more particularly such as are known in the context of various reaction-curing resin compositions for example pentaerythritol or dipentaerythritol, the latter e.g. in concentrations from 0,1% to 2% by weight and/or phenolic compounds e.g. di- or polyphenols such as cresols, e.g. 0-cresol, resorcinol or tannins, e.g. in concentrations from 0,1% to 2%.

Even saccharides and polysaccharides such as sugar or starch may be used in some cases, although care has to be taken as to the compatibility of such substances with other components, e.g. the substances referred to in the next paragraph.

The binder is preferably in the form of a paint base medium such as a latex-like polymer emulsion, e.g. a stabilised and pH buffered polyvinyl acetate or polyvinyl acetate polymethyl methacrylate or similar polymers in concentrations of 1% to 30%, preferably 2% to 20%. Where the composition is to be used alone, as a preparation or coating material without intumescent properties, the said binder is preferably present in amounts of 5 - 20% by weight, more preferably 10 - 15% by weight. The binder is preferably of a type which renders a coating comprising the composition water resistant and water repellent.

The components being present in concentrations as aforesaid, may optionally be diluted with a diluent, preferably water, to make up the total to 100%. For reasons which will be explained further below it is preferred for the inorganic acid source to be present in an amount stoichiometrically in excess of the polyhydroxy component.

The compositions may be used as such, e.g. as a clear coating and/or impregnation agent for timber, cardboard and the like. Optionally, and if desired, a pigment or colouring matter may also be included.

It was found that the water soluble components of the fire retardant and intumescent composition penetrate selectively into wood or cardboard leaving some of the insoluble components behind to form a thin water-repellent and intumescent layer. This composition may be used for dipping the cellulosic material into or for applying a coat thereto.

For other purposes, e.g. the protection of mining timber, the fire retardant composition may be used to impregnate, preferably to impregnate under pressure, the mining timber, rendering the timber resistant to fire and to leaching out of the water soluble chemicals.

The fire retardant and intumescent composition may comprise as a blowing agent melamine or compounds of melamine and formaldehyde,in particular those which are themselves resinous substances or starting compounds for such resinous substances and may constitute from 1% to 20% by weight of the composition. Melamine formaldehyde resins, when heated, split off ammonia and water to achieve the bloating action. Similar effects may be achieved with methylol melamine, urea formaldehyde, polyvinyl chloride (which releases HCl) and chlorinated hydrocarbons, in particular chlorinated paraffins.

The fire retardant and intumescent composition should include substantially water insoluble substances capable of forming a carbonaceous char. The polyhydroxy compounds aforesaid, e.g. dipentaerythritol, may serve for that purpose if in sufficiently high a concentration and may constitute 1% to 20% by weight of the total composition.

In addition, the fire retardant and intumescent composition preferably comprises a substantially water insoluble carbonisation accelerator such as ammonium polyphosphate which may be present in the composition at from about 10% to about 40%. Again the function thereof is to be distinguished from the function of the same or similar components in the fire retardant composition. In the present context ammonium polyphosphate is distinctly preferred. It not only additionally retards combustion because of its reaction with the substance capable of forming a carbonaceous char, forming fire retardant esters, but it also provides additional bloating action on heating.

Again, one or more pigments or colouring matter may be included in the fire retardant and intumescent composition, so as to distinguish treated cellulosic material from untreated cellulosic material and/or, by using different colours, to distinguish cellulosic material treated with for instance, a fire retardant composition in accordance with the invention, from a cellulosic material treated with a fire retardant and intumescent composition in accordance with the invention, or to distinguish between different degrees or methods of treatment using different processes such as pressure impregnation, dipping or the like.

The scope of the invention extends to the novel compositions as well as to the products treated therewith e.g. mining, structural and building timber and products thereof.

It is believed that the technical success of the composition according to the invention may be based at least in part on the following phenomena, although the applicant is not to be bound by these explanations.

The fire retardant ingredients of the coating composition, when the latter is applied to the surface of timber, cardboard or the like, penetrate into the interior, whereas some or most of the polymer of the polymer emulsion stays on the surface, where it forms a thin water protective film. In the event of fire, heating causes esterification to take place in two steps:

1. Dipentaerythritol + dicyandiamide + (excess) phosphoric and boric acids heated to ± 150°C forms:

- dipentaerythritol phosphoryl ester
- dipentaerythritol boric ester.

On further heating the esters char and insulate and restrict the flow of oxygen to the cellulose.

2. At higher temperature the excess phosphoric and boric acids esterify with the cellulose itself. Cellulose + urea + phosphoric and boric acids heated to ± 250°C forms:

- cellulose - phosphoryl - amide esters of the type

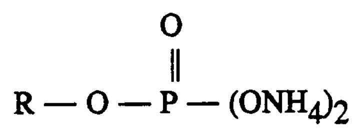

- and similar esters containing boron.

The esterification of the cellulose prevents the formation of levoglucosan, the backbone of the tarry substances that causes flaming combustion of timber of cellulosic products.

These esters char, i.e. form carbonaceous residue on further heating and thus prevent flaming combustion of the cellulose.

The charred surface thus formed ensures good adhesion of the intumescent top protection system so that the combination of the fire retardant that has penetrated (or has been absorbed by) the surface of the wood and the intumescent that only forms a coating, is better protection than either the fire retardant or the intumescent coating on their own.

The coating can be very thin and will still give good protection thus cutting down on cost.

Where the composition is made up to have intumescent properties, the primary fire retardant combination of components stabilises the substrate and provides for prolonged adherence of the intumescent layer (which does not substantially penetrate into the substrate but predominantly forms a surface film).

The invention differs from many conventional fire retardants which rely on dehydration of the cellulose to form a carbon backbone when the volatiles are pyrolysed off.

The teachings of the present invention can, where appropriate, be applied advantageously in combination with the teachings of the aforesaid patent application 92/1185, although for the latter purpose intumescent coatings on the nail plates are preferred which strongly adhere to the metal. This applies particularly to solvent

based compositions and compositions having a reaction curing, e.g. epoxy binder base.

**Examples: (all percentages are by mass)**

1. **Fire retardant composition**

| | |
|---|---|
| mono ammonium phosphate | 22% |
| urea | 6% |
| sodium tetraborate | 5% |
| dicyandiamide | 1% |
| dipentaerythritol | 0,5% |
| wetting agent (Teepol) | 0,5% |
| PVA resin | 5% |
| water | 60% |
| | 100% |

2. **Intumescent composition for use as an additive to 1 above**

| | |
|---|---|
| ammonium polyphosphate | 25% |
| dipentaerythritol | 6% |
| chlorinated paraffin | 4% |
| melamine | 4% |
| dicyandiamide | 4% |
| titanium-dioxide | 8% |
| PVA resin | 12% |
| water | 37% |
| | 100% |

3. **Mixture**

In a preferred composition, a mixture according to Example 2 is admixed with a solution according to Example 1 in a concentration of 10 - 50%. The mixtures are stable for several months. Intumescence is improved by the combination.

4. **Typical fire retardant and intumescent formulation**

A preferred fire retardant and intumescent composition has the following formulation:

| | % |
|---|---|
| Mono ammonium phosphate | 11,0 |
| Urea | 14,0 |
| Borax | 1,5 |
| Ammonium polyphosphate | 4,0 |
| Dipentaerythritol | 1,5 |
| Chlorinated Paraffin | 0,8 |
| Melamine | 0,8 |
| Dicyandiamide | 0,8 |
| Stabilised PVA emulsion (60% solids) | 18,0 |
| Diluent (Water) | 47,6 |
| | 100,00 |

5. **Compositions used for fire tests**

5.1 A fire retardant composition was prepared by mixing the following substances:

| | |
|---|---|
| 2 500 g | mono-ammonium phosphate |
| 3 000 g | urea |
| 300 g | borax |
| 100 g | dicyandiamide |
| 100 g | dipentaerythritol |
| 1 000 g | PVA emulsion containing 60% solids |
| 10 ml | Astrowet (wetting agent) |

The mixture was then dissolved in water whereafter the volume of the solution was made up to 20 liters by adding more water.

5.2 A fire retardant and intumescent composition was prepared by firstly preparing a dry fire retardant mixture as described in Example 5.1 and by then adding thereto 2 liters of an intumescent composition as set out in Example. The combined mixture was then dissolved/dispersed in water and made up to 20 liters by adding more water.

6. **Fire tests**

Five Eucalyptus logs (hereinafter referred to as logs A, B, C, D and E), each about 400 mm long and about 200 mm diameter were prepared for a simulated fire test with a Bunsen flame.

Log A was left untreated.

Log B was coated once with a fire retardant composition as described in Example 5.1.

Log C was coated once with a fire retardant and intumescent composition as described in Example 5.2.

Log D was coated with an intumescent composition as described in Example 2.

Log E was pressure impregnated with the fire retardant solution of Example 5.1.

After treatment all five logs were conditioned in a drying kiln for a period of 24 hours.

Thereafter, their side surfaces were each exposed to the Bunsen flame at a temperature of about 800°C to 900°C, for a period of about 5 minutes.

Log A exhibited flaming combustion after a relatively short heat-up period, forming the familiar cracked pattern of charred wood after a few minutes, with the cracks penetrating about 2 to 4 mm into the surface of the log towards the end of the exposure period, causing self-sustainable combustion of the log.

Log B which was treated with the fire retardant composition, also developed the cracked pattern but to a lesser extent. Flaming combustion was considerably less than in the case of log A.

Log C which was treated with the fire retardant and intumescent coating, exhibited no flaming combustion. The surface layer of the coating swelled to several times its thickness before charring. No cracks formed. When the top layer of char originating from the intumescent was removed, the surface of the wood immediately underneath the intumescent layer also appeared to have been charred but the structure of the wood was relatively strong with little combustion damage. A few small cracks developed, but were effectively covered with the intumescent layer.

Log D also exhibited flaming combustion, but considerably less than log A. A layer of char developed on the surface of the log, but after a while, the log itself started burning with eventual crack formation. By the end of the exposure period, cracks of up to 1 mm deep started developing in the surface of the log.

Log E exhibited no flaming combustion and only minor crack formation.

From these results, it can be concluded that the combination of the fire retardant and the intumescent in a single composition provided better protection against fire than either the fire retardant or the intumescent. Pressure impregnation with the fire retardant solution also yielded good results, but expensive equipment is required for the large scale commercial use thereof.

## Claims

**1.** An aqueous fire retardant and intumescent composition for the treatment of a cellulosic material such as wood and processed wood, comprising an aqueous fire retardant solution capable of penetrating into the cellulosic material characterised in that the composition comprises

- a substantially water insoluble intumescent composition dispersed in the fire retardant solution for forming an intumescent layer on the surface of the cellulosic material; and

- a water dispersible and polymeric binder, preferably a pH buffered and stabilised polyvinyl acetate, capable of forming a water impervious coating on the surface of the cellulosic material, to protect it against leaching therefrom of one or more components of the fire retardant solution.

**2.** An aqueous fire retardant and intumescent composition as claimed in claim 1, characterised in that the fire retardant solution comprises:

- a substantially water soluble amide, preferably urea, in a concentration of from 1% to 20% by weight; and

- a substantially water soluble source of phosphate groups, preferably mono ammonium phosphate, in a concentration of from 5% to 25% by weight, for forming phosphate esters with the cellulosic material in the presence of the substantially water soluble amide.

**3.** An aqueous fire retardant and intumescent composition as claimed in claim 1 or claim 2, characterised in that the intumescent composition comprises:

- a substantially water insoluble blowing agent, preferably dicyandiamide, in a concentration of from 1% to 5% by weight; and

- a substantially water insoluble substance, preferably dipentaerythritol, in a concentration of from 1 % to 5% by weight, capable of forming, in combination with the blowing agent, a carbonaceous char.

4. A fire retardant and intumescent composition as claimed in any preceding claim, characterised in that it comprises in addition a substantially water insoluble source of phosphate groups, preferably ammonium polyphosphate, in a concentration of from 1 % to 5% by weight, for substantially remaining on the surface of the cellulosic material, to act as an accelerator for the carbonisation of the substance capable of forming a carbonaceous char upon heating thereof.

5. A fire retardant and intumescent composition as claimed in any preceding claim, characterised in that the fire retardant solution comprises in addition, a substantially water soluble source of borate groups, preferably sodium tetraborate, in a concentration of from 1% to 5% by weight.

6. A fire retardant and intumescent composition as claimed in any preceding claim, characterised in that it comprises, in addition, a pigment or colouring matter.

**Patentansprüche**

1. Wasserhaltiges, feuerhemmendes und blähfähiges Präparat zur Behandlung von zellstoffhaltigem Material, beispielsweise Holz und verarbeitetes Holz, welches eine wässrige, feuerhemmende Lösung enthält, mit der Fähigkeit in das zellstoffhaltige Material einzudringen, dadurch gekennzeichnet, daß das Präparat

   - ein im wesentlichen wasserunlösliches, blähfähiges Mittel enthält, das in der feuerhemmenden Lösung zur blähfähigen Beschichtung der Oberfläche des zellstoffhaltigen Materials dispergiert ist; und

   - ein wasser-dispergierbares und polymerisches Bindemittel enthält, vorzugsweise ein pH-gepuffertes und stabilisiertes Polyvinylacetat, das zur Bildung einer wasserundurchlässigen Schicht an der Oberfläche des zellstoffhaltigen Materials fähig ist, um letzteres vor dem Auslaugen eines oder mehrerer der Bestandteile der feuerhemmenden Lösung zu schützen.

2. Wasserhaltiges, feuerhemmendes und blähfähiges Präparat gemäß Anspruch 1, dadurch gekennzeichnet, daß die feuerhemmende Lösung

   - ein im wesentlichen wasserlösliches Amid enthält, vorzugsweise Harnstoff, in einer Konzentration von 1 - 20 Gew.-%; sowie

   - eine im wesentlichen wasserlösliche Phosphatgruppenquelle, vorzugsweise Monoammoniumphosphat, in einer Konzentration von 5 - 25 Gew.-%, um mit dem zellstoffhaltigen Material in Gegenwart des im wesentlichen wasserlöslichen Amids Phosphatester zu bilden.

3. Wasserhaltiges, feuerhemmendes und blähfähiges Präparat gemäß Anspruch 1 oder 2, dadurch gekennzeichnet, daß das blähfähige Mittel

   - ein im wesentlichen wasserunlösliches Treibmittel, vorzugsweise Dicyandiamid, in einer Konzentration von 1 - 5 Gew.-% enthält; sowie

   - eine im wesentlichen wasserunlösliche Substanz, vorzugsweise Dipentaerythritol, in einer Konzentration von 1 - 5 Gew.-%, welche in Kombination mit dem Treibmittel einen kohlenstoffhaltigen Verkohlungsrückstand bilden kann.

4. Feuerhemmendes und blähfähiges Präparat gemäß einem oder mehreren der vorhergehenden Ansprüche, dadurch gekennzeichnet, daß es zusätzlich eine im wesentlichen wasserunlösliche Phosphatgruppenquelle, vorzugsweise Ammoniumpolyphosphat, in einer Konzentration von 1 - 5 Gew.-%, enthält, welche im wesentlichen an der Oberfläche des zellstoffhaltigen Materials verbleiben soll und als Beschleuniger für die Verkohlung der beim Erhitzen zur Bildung des kohlenstoffhaltigen Verkohlungsrückstandes fähigen Substanz wirkt.

5. Feuerhemmendes und blähfähiges Präparat gemäß einem oder mehreren der vorhergehenden Ansprüche, dadurch gekennzeichnet, daß die feuerhemmende Lösung zusätzlich eine im wesentlichen wasserlösliche Boratgruppenquelle, vorzugsweise Natriumtetraborat, in einer Konzentration von 1 - 5 Gew.-% enthält.

6. Feuerhemmendes und blähfähiges Präparat gemäß einem oder mehreren der vorhergehenden Ansprüche, dadurch gekennzeichnet, daß es zuätzlich ein Pigment oder einen Farbstoff enthält.

**Revendications**

1. Composition aqueuse de retardement de feu et intumescente pour le traitement d'un matériau cellulosique tel que le bois et le bois traité, comprenant une solution de retardement de feu aqueuse pouvant pénétrer dans le matériau cellulosique, caractérisée en ce que cette composition comprend :

   - une composition intumescente sensiblement insoluble dans l'eau dispersée dans la solution de retardement de feu pour former une couche intumescente à la surface du matériau cellulosique ; et

- un liant dispersable dans l'eau et polymère, de préférence un acétate de polyvinyle à pH tamponné et stabilisé, pouvant former un revêtement imperméable à l'eau à la surface du matériau cellulosique, pour le protéger contre la lixiviation d'un ou plusieurs composants de la solution de retardement de feu.

**2.** Composition aqueuse de retardement de feu et intumescente, selon la revendication 1, caractérisée en ce que la solution de retardement de feu comprend :

- un amide sensiblement hydrosoluble, de préférence l'urée, en une concentration de 1 à 20% en poids ; et
- une source de groupes phosphate sensiblement hydrosoluble , de préférence le monophosphate d'ammonium, en une concentration de 5 à 25% en poids, pour former les esters de phosphate avec le matériau cellulosique en présence de l'amide sensiblement hydrosoluble.

**3.** Composition aqueuse de retardement de feu et intumescente selon la revendication 1 ou 2, caractérisée en ce que la composition intumescente comprend :

- un agent de soufflage sensiblement insoluble dans l'eau, de préférence le dicyandiamide, en une concentration de 1 à 5% en poids ; et
- une substance sensiblement insoluble dans l'eau, de préférence le dipentaérythritol, en une concentration de 1 à 5% en poids, pouvant former, en combinaison avec l'agent de soufflage, un produit de carbonisation carbonné.

**4.** Composition de retardement de feu et intumescente selon l'une quelconque des revendications précédentes, caractérisée en ce qu'elle comprend en outre une source sensiblement insoluble dans l'eau de groupes phosphate, de préférence un polyphosphate d'ammonium, en une concentration de 1 à 5% en poids, restant sensiblement à la surface du matériau cellulosique, pour agir comme accélérateur pour la carbonisation de la substance pouvant former un produit de carbonisation carboné lors de son chauffage.

**5.** Composition de retardement de feu et intumescente selon l'une quelconque des revendications précédentes, caractérisée en ce que la solution de retardement du feu comprend en outre, une source sensiblement hydrosoluble de groupes borate, de préférence un tetraborate de sodium, en une concentration de 1 à 5% en poids.

**6.** Composition de retardement de feu et intumescente selon l'une quelconque des revendications précédentes, caractérisée en ce qu'elle comprend, en outre, un pigment ou une matière colorante.